# EUROPEAN PATENT APPLICATION

(11) **EP 2 262 336 A1**
(43) Date of publication of application: **15.12.2010**
(21) Application number: 09007684.5
(22) Date of filing: 10.06.2009
(51) Int. Cl.: H04W 72/04

(54) **Method for improved link adaptation in cellular wireless networks**

(71) Applicant: Deutsche Telekom AG, 53113 Bonn (DE); Technische Universität Berlin, 10623 Berlin (DE)
(72) Inventor: Heinrich Droste, 64380 Rossdorf (DE); Andreas Müller, 71336 Waiblingen (DE); Frank Philipp, 10557 Berlin (DE)
(74) Representative: Kampfenkel, Klaus

(57) **Abstract**

As a new and improved way for improving spectral efficiency of a cellular wireless network the invention proposes a method for communication with the steps of allocating a pre-determined wireless resource to be used for a first data transmission from a first transmitting device (410; 120) to a first receiving device (120; 410) during a predetermined time interval, determining at least one second transmitting device (420, 430, 440, 450; 110, 130) scheduled for a second data transmission via said predetermined wireless resource during said pre-determined time interval, providing channel state information of at least one of the communication channels between respective ones of said second transmitting devices (420, 430, 440, 450; 110, 130) and said first receiving device (120; 410), predicting an interference state for said first data transmission caused by said second data transmissions based on said channel state information, defining at least one transmission parameter for said first data transmission based on said predicted interference state, and performing said first data transmission during said pre-determined time interval using the defined transmission parameters.

The invention further proposes a cellular wireless communication network, a base station and a mobile communication device for performing such a method.

## Description

### Field of the invention

The invention generally relates to wireless communication, and especially to a method for communication in a cellular wireless communication network and to an accordingly adapted base station, mobile communication device and communication network.

### Background of the invention

As the demand for all types of high-speed wireless communication services such as internet browsing, online gaming, or video streaming is steadily increasing, next generation cellular networks have to provide high data rates with low latency times in order to meet the stringent requirements of these evolving applications and services. Due to the scarcity of the radio spectrum, however, this can only be accomplished if the available radio resources are used in a much more efficient way than in current cellular networks. For that reason, there is a need for new methods and techniques, with which the spectral efficiency can be significantly increased, preferably without impairing the system fairness.

Recently, base station cooperation techniques have attracted a lot of attention because of their potential for realizing a significant increase of the spectral efficiency. Since cellular networks are in general interference-limited, techniques that mitigate the effects of interference caused by adjacent site transmissions can considerably improve the system performance. A promising approach is the cooperation of different base stations, in the following referred to as inter-site cooperation, via a high-speed backbone network, that allows reliable information exchange among them. Thus, all antennas of the cooperating base stations can be perceived as a virtual single antenna array, which enables joint transmission and joint detection processing techniques with an increased number of antennas.

In the downlink cooperating base stations can coordinate the scheduling of users in different sites in an appropriate way in order to reduce the interference level experienced by these users. This represents a particularly promising approach if the base stations are equipped with multiple antenna elements and perform some kind of precoding for steering the signal energy towards the desired users. Furthermore, by jointly transmitting from multiple cooperating base stations to a specific user, inter-site interference can be transformed into constructive signals, thus facilitating potential large performance gains. In the uplink, in contrast, the concept of joint processing of the signals received by each cooperating base station might be applied in order to improve signal detection. A method of providing a mobile station with communication services through base station cooperation in a communication system is for instance known from US 2008/0132262 A1, wherein base station cooperation is employed only for selected mobile stations.

One of the major challenges of base station cooperation techniques is the large amount of data, such as signaling traffic and channel state information (CSI), which has to be exchanged within the cooperating base station network. A simple cooperation approach, which does not impose any restriction on the backhaul, is so called intra-site cooperation, where only the sectors corresponding to a single site are allowed to cooperate with each other, e.g. the three sectors of a trisector base station, each of which is served by one of three antenna panels of the base station. Since the sectors are served by the same base station, basically no backhaul limitation exists with respect to the kind of data to be shared between these cooperating sectors. If not stated otherwise, in the following the terms sector and cell are used synonymously.

In known cellular networks usually various transmission parameters, such as the modulation scheme or channel coding rate, are dynamically adjusted to the current channel conditions in order to beneficially exploit the time-varying nature of the channel. However, as a matter of fact, there is always a certain delay between the instant when the transmission parameters to be used are determined and the actual data transmission. While the changes of the actual channel of the corresponding users, at least for low to moderate user speeds, typically are more or less negligible, the interference situation can be completely different, even from one transmission time interval to the other. In the uplink, this is because in other sectors other users might transmit than during the time when the link adaptation was performed whereas in the downlink it is because other sectors might use completely different precoders than before, thus steering most of the transmit power in completely different directions. In consequence, the transmission parameters that are actually used during the data transmission do generally not match the transmission parameters that would be optimal for the corresponding channel conditions since they have been determined based on out-dated information of the interference situation. For that reason, the used modulation and coding scheme (MCS) is frequently over- and underestimated, which leads to an increased error probability and low spectral efficiency, respectively.

It is therefore an object of the present invention to show a new and improved way of to efficiently use the available spectrum for data transmissions in a cellular wireless communication network. In particular it is an object of the invention to show a new and improved way of performing link adaptation in a cellular wireless communication network.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive method for communication in a cellular wireless communication network comprises the step of allocating a pre-determined wireless resource to be used for a first data transmission from a first transmitting device to a first receiving device during a pre-determined future time interval. At least one second transmitting device scheduled for a second data transmission via said pre-determined wireless resource during said pre-determined time interval is determined and then, based on provided channel state information of at least one of the communication channels between respective ones of said second transmitting devices and said first receiving device, an interference state for said first data transmission caused by said second data transmissions is predicted. Based on said predicted interference state at least one transmission parameter for said first data transmission is defined. During the pre-determined time interval said first data transmission is then performed using the defined transmission parameters.

Preferably, the cellular wireless communication network is a mobile communication network such as UMTS, WiMax or in particular a network according to the Long Term Evolution (LTE) communication standard developed by the Third Generation Partnership Project (3GPP). The LTE standard is described for instance in "E-UTRA Physical Channels and Modulation (Release 8)", 3GPP TS 36.211, V 8.3.0, May 2008 and related 3GPP publications.

Accordingly, the first data transmission typically is performed between a serving base station and an associated mobile communication device located in a sector of the base station, wherein the first data transmission can be either an uplink or a downlink communication. Depending on the communication service provided by the base station, such as speech or data services, different kinds of data can be transmitted via said first data transmission.

The step of allocating a pre-determined wireless resource typically is performed by the base station, wherein for a future time slot an uplink or downlink resource is allocated. Such resource can for instance comprise a frequency band, a power level and also a precoding for steering the signal energy.

The step of defining at least one transmission parameter for the first data transmission advantageously comprises a link adaptation by selecting a modulation scheme and/or a coding or data rate for the first data transmission.

The invention proposes a method based on a novel base station cooperation scheme, which can be applied to both uplink and downlink and which aims at enabling base stations or mobile stations to better predict the interference level that they will experience during an actual transmission in the future. This way, significant performance gains can be achieved by means of an improved link adaptation process.

For this purpose, advantageously resource allocation information is transmitted between the first base station, which takes part in the first data transmission, and at least one cooperating base station, wherein the resource allocation information preferably is transmitted via a backbone network connecting the base stations of the cellular wireless communication network. From this resource allocation information the at least one second transmitting device can be determined which is scheduled to also transmit during the pre-determined time interval using the same resources as those allocated for the first data transmission, and which therefore potentially interferes with the first data transmission.

If the first data transmission is an uplink communication, the first receiving device is a first base station and the first transmitting device is a first mobile communication device associated with said first base station. In a preferred embodiment of an uplink communication the second, potentially interfering transmitting devices comprise at least one second mobile communication device which is associated with a cooperating base station of said first base station, wherein providing channel state information of a communication channel comprises the first base station evaluating at least one signal transmitted by one of said second transmitting devices.

This at least one signal transmitted by one of the second transmitting devices can for instance be a reference signal regularly transmitted by a mobile communication device in a network according to the LTE communication standard, such as a sounding reference signal or a demodulation reference signal. For the first base station to be able to receive such reference signals from mobile communication devices which are associated to different base stations, preferably the respective serving base stations respectively provide information to the first base station, when and on which resources such reference signals are transmitted by its associated mobile communication devices.

The inventive method may also comprise intra-site cooperation, wherein channel state information of potentially interfering mobile communication devices which are associated with the first base station are determined, requiring no additional information from cooperating base stations. Since in the same sector for different mobile communication devices typically not the same resources are used for the same transmission interval, for an inventive intra-site cooperation the first transmitting device preferably is located in a different sector of the first base station than the second transmitting devices. Furthermore, also intra-site cooperation techniques known from prior art, which employ a joint detection of signals from mobile communication devices located in different sectors of the same site and a joint link adaptation for such mobile devices, may be combined with the inventive inter-site cooperation technique.

If the first data transmission is a downlink communication, preferably the first transmitting device is a first base station and the first receiving device is a first mobile communication device associated with said first base station. In this case each of the second, potentially interfering transmitting devices is a cooperating base station of said first base station.

In a preferred embodiment of a downlink communication the channel state information of the respective communication channel between a cooperating base station and the first mobile communication device is provided to the first base station from the respective cooperating base station.

Channel state information typically can only be determined in the respective receiving device. Therefore, for the downlink communication the step of providing channel state information of at least one communication channel preferably comprises the first mobile communication device performing a multi-cell channel estimation.

The steps of predicting an interference state and of defining said at least one transmission parameter are either performed by the first transmitting device or by the first receiving device. For the uplink communication these steps preferably are performed in the base station. For the downlink communication they are performed either in the base station or in the mobile communication device, depending on whether the network provides for channel state information determined by mobile communication devices to be transmitted to the associated base stations.

Also within the scope of the invention lies a cellular wireless communication network, which is adapted for performing a method as described above, as also a base station and a mobile communication device for use in such cellular wireless communication network.

For performing the inventive method the inventive devices preferably are provided with a micro-processor and a memory in which electronically readable instructions are stored which are executable by said micro-processor in order to execute any of the embodiments of the above described method.

To provide an easy implementation and/or specific adaptation of the invention, also a digital storage medium lies within the scope of the invention, comprising said electronically readable control instructions adapted to execute any of the embodiments of the above described method, when inserted into the respective device.

### Brief Description of the Figures

It is shown in
- Fig. 1: schematically the general setup of an inventive wireless communication network with cooperating base stations,

- Fig. 2: schematically an uplink communication in the network shown in Fig. 1,
- Fig. 3: schematically the steps of a preferred embodiment of an inventive method for an uplink communication,
- Fig. 4: schematically a downlink communication in the network shown in Fig. 1,
- Fig. 5: schematically the steps of a first preferred embodiment of an inventive method for a downlink communication,
- Fig. 6: schematically the steps of a second preferred embodiment of an inventive method for a downlink communication,
- Fig. 7: the deviation of a predicted modulation and coding scheme (MCS) related to the ideal MCS for an uplink simulation without cooperation among different base stations,
- Fig. 8: the deviation of a predicted modulation and coding scheme (MCS) related to the ideal MCS for an uplink simulation employing a preferred embodiment of the inventive method,
- Fig. 9: simulation results of the improvement in spectral efficiency achievable by the inventive method, and
- Fig. 10: simulation results of the improvement in cell edge throughput achievable by the inventive method.

### Detailed Description of the Invention

Subsequently, preferred but exemplar embodiments of the invention are described in more detail with regard to the figures. Same reference numbers indicate same or similar components.

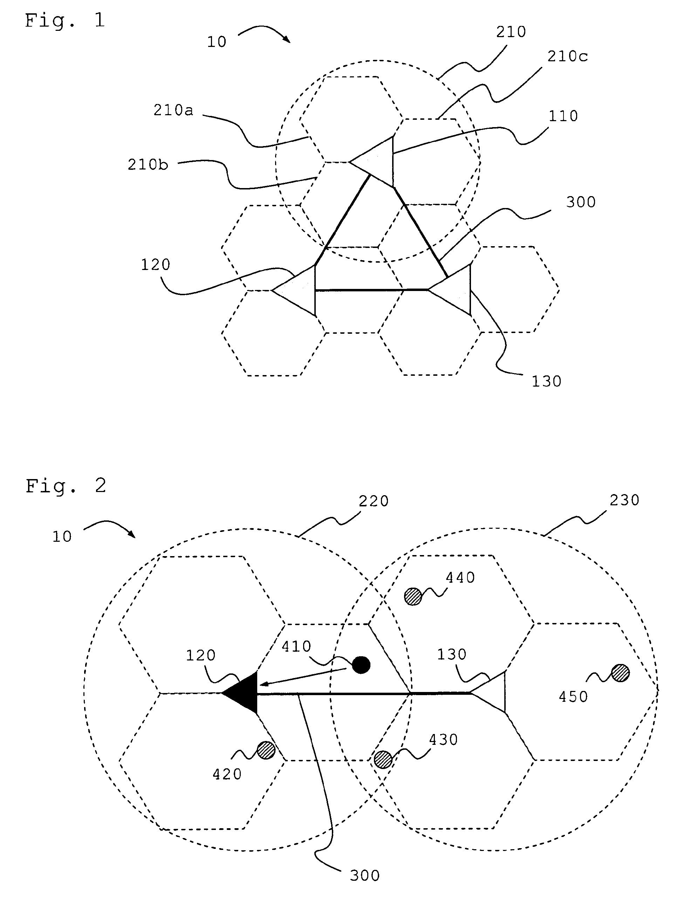

In Fig. 1 the principle of a cellular wireless network 10 with cooperating base stations 110, 120 and 130 is shown. In the shown embodiment the base stations are trisector base stations, wherein - exemplary depicted for the base station 110 - the base station site 210 comprises three sectors 210a, 210b and 210c. The term base station site in this respect is used to describe the general coverage area of the respective base station. The cooperating base stations 110, 120 and 130 are connected by a backbone network 300, wherein in case of the LTE communication standard the backbone links could for example be realized by means of the X2 interface. Although only three exemplary base stations are shown, it is understood that an inventive wireless communication network typically comprises a plurality of base stations which communicate wirelessly with a plurality of respectively associated mobile communication devices.

Fig. 2 shows an exemplary uplink communication in a network as shown in Fig. 1, wherein the mobile communication device 410 transmits data to the base station 120. In order to efficiently use the available spectrum, other transmitting devices might use the same resources. This however potentially leads to interference. In Fig. 2 as potentially interfering transmitting devices the mobile communication devices 420, 430, 440 and 450 are depicted. The mobile stations 430, 440 and 450 are associated with the base station 130. In order to determine which of these mobile stations may interfere with the data transmission from mobile station 410 to base station 120, allocation information regarding these mobile stations is transmitted from base station 130 to base station 120. For simplicity only the sites 220 and 230 of the two cooperating base stations 120 and 130 are shown. Of course, also further cooperating base stations with additional respectively associated and potentially interfering mobile communication devices could be taken into account by the inventive method.

A basic inventive idea is to overcome the problem that the interference situation during the actual data transmission might be completely different from the interference situation during the scheduling and conventional link adaptation process. For this purpose the interference situation during the actual data transmission is accurately predicted and the link adaptation is performed based on this predicted interference.

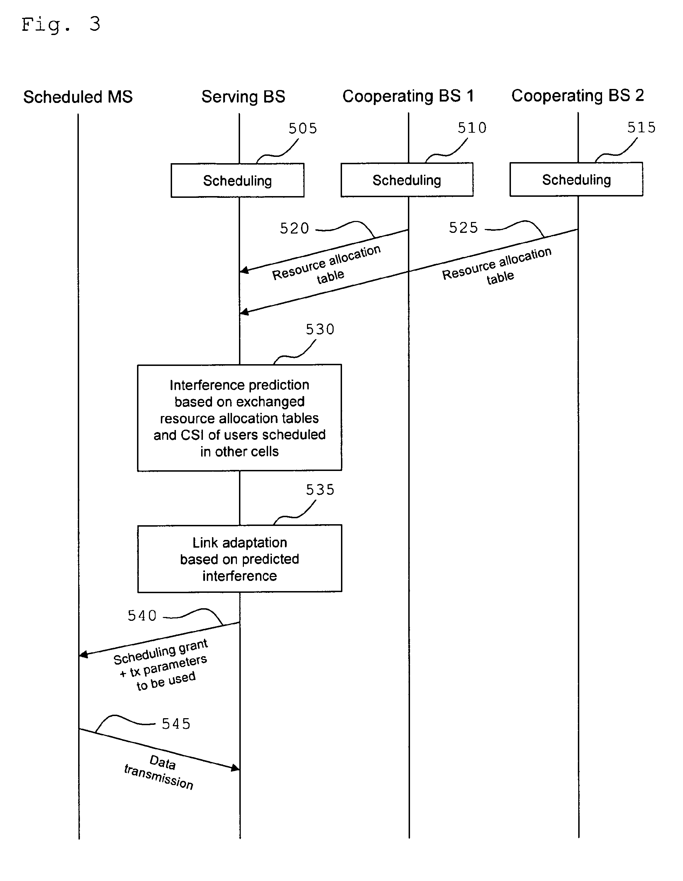

A preferred embodiment of the inventive method for an uplink communication as shown in Fig. 2 is depicted in Fig. 3.

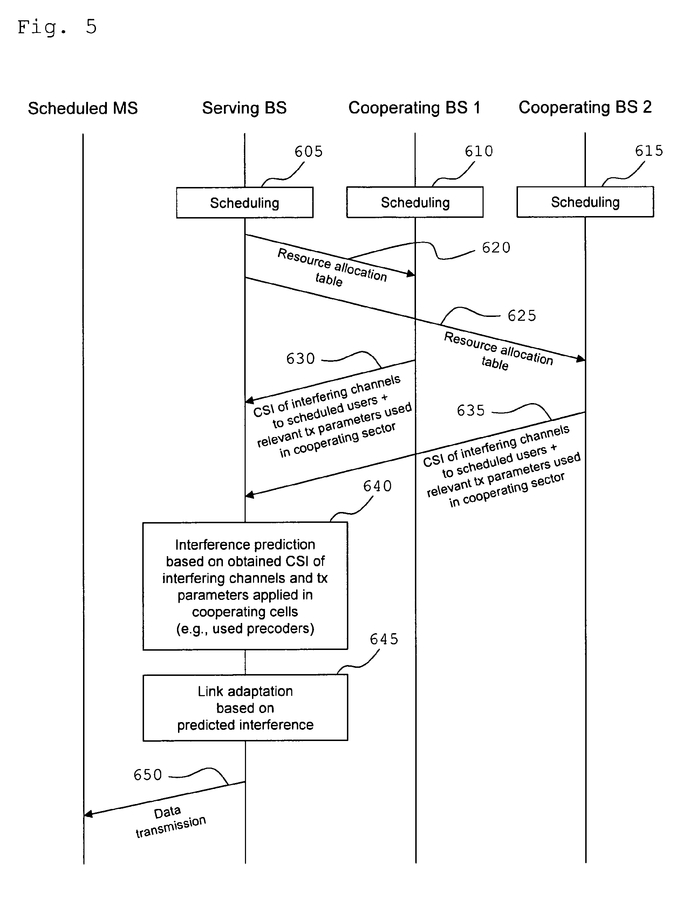

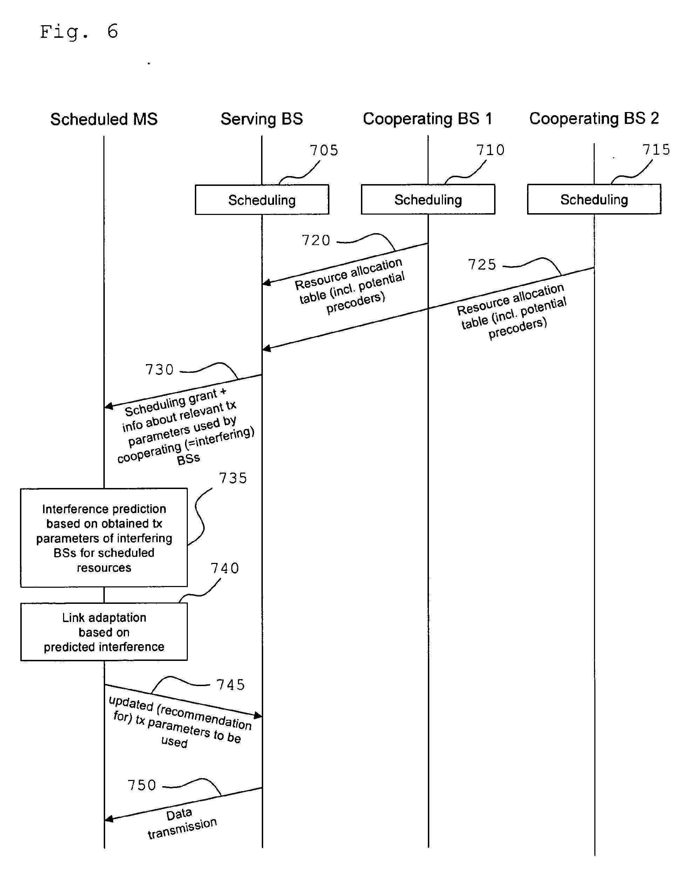

In Fig. 3, as also in Figs. 5 and 6, the inventive steps are shown in a timeline from top to bottom. Other than in Fig. 2, the steps shown in Fig. 3 take two cooperating base stations, named BS 1 and BS 2, into account. The serving base station (BS) of Fig. 3 can be regarded as the base station 120 as shown in Fig. 2. The scheduled mobile station (MS) can be regarded as the mobile communication device 410 of Fig. 2. In the following the terms mobile station, mobile communication device and user are used essentially synonymously.

First of all, each base station assigns the available resources to appropriate users. In case of a 3GPP-LTE system, this means that each base station determines which user should transmit on a given set of physical resource blocks (PRBs) and at which power level and modulation and coding scheme. This is depicted in Fig. 3 as steps 505, 510 and 515. In a next step, these scheduling decisions are transmitted between different cooperating base stations via a backhaul or backbone network. In the embodiment shown in Fig. 3 the cooperating base stations BS 1 and BS 2 transmit in steps 520 and 525 respective resource allocation tables to the serving base station.

In this regard, different criteria might be effective for deciding between which base stations such an exchange should take place. Examples include a fixed configuration by the network operator or a dynamic adjustment of the set of cooperating base stations based on measurements, such as measurements of the average interference level experienced from the sectors of other base stations.

Upon reception of the resource allocation information from the other cooperating base stations, the considered serving base station is aware of the users that will transmit data in the cooperating sectors during the actual data transmission of the users for which the link adaptation remains to be done. If the base station has appropriate channel state information of at least some of these interfering users, it can in step 530 accurately predict the interference caused by them and take this predicted interference in step 535 into account for determining the transmission parameters, such as the modulation scheme or code rate, that should be used for the users scheduled in the own sector.

This way, it is hence possible to more reliably estimate the interference situation during the actual data transmission and therefore to select more appropriate transmission parameters when performing the link adaptation stage, which are then eventually signaled in step 540 to the scheduled users and finally used by them during the actual data transmission in step 545. In order to avoid an unacceptable increase of latency, it should be noted that it is preferable to just perform the optimization of the link adaptation based on the exchanged resource allocation tables and no refinement of the actual scheduling decisions themselves, since for that purpose generally additional backhaul signaling would be required.

In a preferred embodiment of the inventive method it is a prerequisite for proper operation that base stations can acquire accurate channel state information of at least some of the interfering users associated with other base stations. This is for instance realized by simply evaluating the reference signals that regularly have to be transmitted by all users anyway since accurate channel state information is generally needed by their corresponding serving base stations as well. In a 3GPP-LTE system, for that purpose both the sounding reference signals as well as the demodulation reference signals might be evaluated. The demodulation reference signal is always transmitted if a user is currently transmitting data to its serving base station. Hence, the other cooperating base station can determine based on the exchanged scheduling decisions which users currently are transmitting these signals and consequently associate the estimated channels with the corresponding users. The users who should transmit sounding reference signals are dynamically scheduled in 3GPP-LTE, but generally independently of the scheduling process for the actual data transmission. Hence, with advantage the cooperating base stations are informed about the users scheduled for transmitting such a sounding reference signal by means of additional backhaul signaling, so that they can associate the estimated channels with the users also in this case.

It is to be noted that the inventive method does not necessarily require accurate channel state information of all possible interfering users in other sectors. In many cases, a good performance may already be achieved if at least the channels of the strongest possible interferers, i.e. the dominant interferers, are known, which are actually also the ones that might be easier to estimate. For instance, of the mobile stations 430, 440 and 450 as shown in Fig. 2 which are associated with the cooperating base station 130, only the channel state information of the mobile stations 430 and 440 may be needed, if the path loss between the mobile station 450 and the base station 120 is significantly greater than for the mobile stations 440 and 450, typically resulting in less interference.

The expected interference level for a given resource could also with advantage be predicted as an average interference level of the non-dominant interferers plus additionally the interference caused by dominant interferers if they have been scheduled on the considered resource by one of the cooperating base stations.

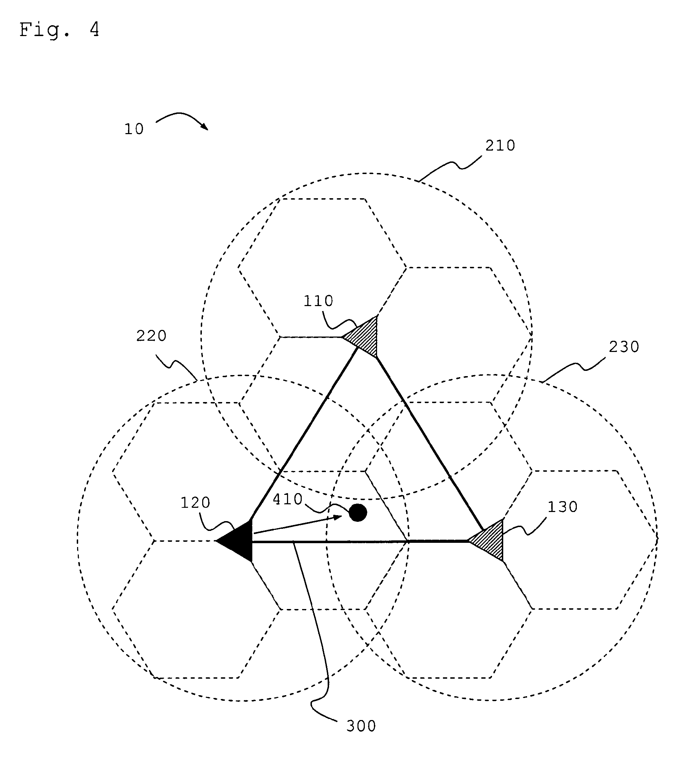

Fig. 4 shows an exemplary downlink communication in a network as shown in Fig. 1, wherein the serving base station 120 transmits data to the associated mobile communication device 410 located in a sector of the respective base station site 220. Also shown are two cooperating base stations 110 and 130 and their respective sites 210 and 230. The base stations 110, 120 and 130 are connected by the backbone network 300.

In the downlink, the main problem is not that the interferers during the actual data transmission to a user are different from the interferers that are active during the scheduling and link adaptation process since the interferers are always the same base stations. However, it might happen that some base stations actually do not transmit any data on a given resource during the actual data transmission, but during the scheduling and/or link adaptation process or vice versa, thus also leading to completely different interference situations. Furthermore, in case that base stations are equipped with multiple antenna elements and employ some kind of precoding, such as transmit beamforming for steering the signal energy towards a specific direction, different precoders might be used by interfering base stations during the actual data transmission compared to the precoders used during the scheduling and/or link adaptation stage, wherefore the interference level experienced by a certain user in another sector might significantly change as well.

In the downlink, one generally has to distinguish between the cases where channel state information is available at the base station side, as it might be the case for time division duplex (TDD) systems, and cases where typically no CSI is available at the base station side, as for instance in frequency division duplex (FDD) systems.

In Fig. 5 the basic procedure of a first preferred embodiment of the inventive method for a downlink communication as shown in Fig. 4 is shown for the case that channel state information is available at the base station side.

In steps 605, 610 and 615 the base stations perform scheduling as usual. If channel state information is available at the base station side, cooperating base stations preferably exchange not only their resource allocation tables, if applicable including information about the applied precoders, but also channel state information of the users associated with the actual serving base station, i.e., information of the interfering channels of these users. In the shown embodiment this is realized in a two-step approach by first performing steps 620 and 625 and then steps 630 and 635, in order to reduce the backhaul load, so that a cooperating base station first of all gets the resource allocation table of the considered serving base station and then signals channel state information as well as the transmit power levels and used precoders only for the users who are actually scheduled by the considered serving base station. The channel state information preferably is determined by a multi-cell channel estimation performed by the scheduled mobile station, the results of which are transmitted beforehand to the respective cooperating base stations. With this information, each base station can then in step 640 accurately predict the interference again and hence improve in step 645 the link adaptation process for the data transmission performed in step 650.

A second preferred embodiment of the inventive method for a downlink communication as shown in Fig. 4 is depicted in Fig. 6 for the case that no channel state information is available at the base station side.

In case that no explicit channel state information is available at the base station side, such as for FDD operation, the mobile stations usually send a recommendation of the transmission parameters to be used to the corresponding base station via a feedback link. In such a case, the base stations first of all perform in steps 705, 710 and 715 the scheduling again, potentially based on previous feedback from the mobile stations. Then, cooperating base stations transmit their resource allocation tables to the serving base station in steps 720 and 725. The serving base station then notifies the scheduled mobile station in step 730 on which resources data will be transmitted to it as well as relevant information about what the main interfering base stations will do on these resources. This may include, but is not limited to, information about the precoders that will be used in the cooperating, i.e. interfering, sectors and the assigned power levels. Having channel state information of the interfering base station, which can for instance be acquired by performing a multi-cell channel estimation, the scheduled mobile station then takes this information into account and performs a more reliable prediction of the interference situation during the actual data transmission in step 735. Based on the predicted interference, it can then determine in step 740 appropriate transmission parameters, such as the modulation scheme and code rate to be used, and signal these parameters in step 745 to its serving base station, which then uses these parameters for the actual data transmission in step 750.

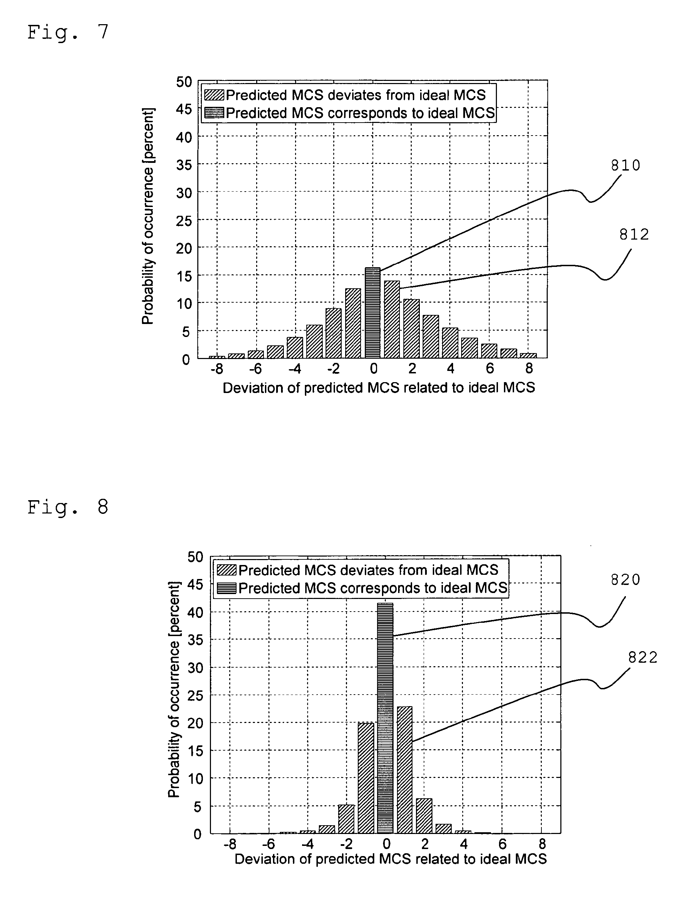

In Figures 7, 8, 9 and 10 simulation results are illustrated showing the improvements that can be achieved by the inventive method in the uplink.

For evaluating the performance of the proposed cooperation technique a cellular system consisting of 19 sites and 3 sectors per site based on the 3GPP LTE parameters is simulated. Wrap around is applied for avoiding boundary effects and, hence, for accurate interference modeling. The mobiles are equipped with a single antenna for uplink transmission whereas the base stations have 2 receive antennas. Besides, a carrier frequency of 2.6 GHz, bandwidth of 10 MHz, full buffer service, in average 10 mobiles per sector and an inter-site distance of 500 m is assumed. The link adaptation is modeled with realistic delay including hybrid automatic repeat request (HARQ) with Chase combining. The scheduler is frequency selective and proportional fair. All 19 sites exchange their scheduling decisions with each other.

In Fig. 7, the deviation of the predicted modulation and coding scheme (MCS) related to the ideal MCS is shown for a LTE uplink simulation without cooperation among different base stations. Assuming that the MCS could be determined after transmission depending on the actual channel conditions, the ideal MCS is chosen as the highest possible MCS without exceeding the target block error rate. Due to the unknown interference situation, only in 16 % of all cases the predicted MCS corresponds to the ideal MCS, depicted by reference numeral 810. In all other cases, exemplary depicted by reference numeral 812, the predicted MCS does not correspond to the ideal MCS. Hence, the probability of over- or underestimating the MCS is high which degrades the system performance. In comparison, Fig. 8 shows the deviation of the predicted MCS in case of cooperating base stations according to the invention. Based on the exchanged scheduling decisions, the interference situation can be well predicted for the actual transmission which results in a significantly improved link adaptation. The probability for predicting the ideal MCS is increased from 16 % to 41 %, depicted by reference numeral 820. The probabilities for incorrectly predicting the ideal MCS, exemplary depicted by reference numeral 822, is accordingly decreased. Furthermore the deviation of the predicted MCS from the ideal MCS is considerably reduced.

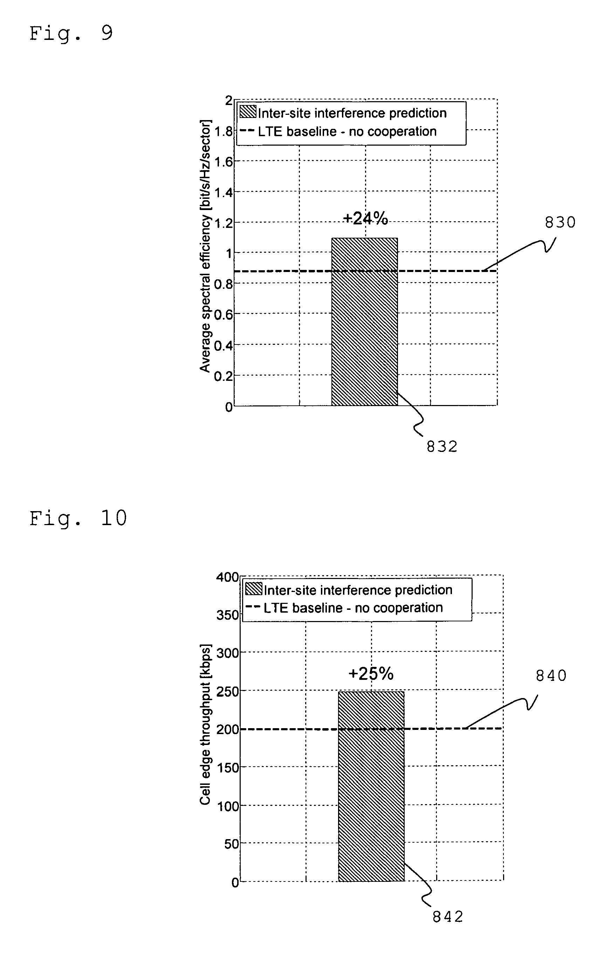

Figs. 9 and 10 show the performance of the inventive interference prediction technique for the LTE uplink. The results indicate that a significant improvement over the LTE baseline performance without any base station cooperation, respectively depicted by reference numeral 830 and 840, can be achieved due to the greatly enhanced link adaptation process. Both spectral efficiency 832 and cell edge throughput 842 are increased by 24 % and 25 % respectively.

With the proposed approach, it is possible to predict the interference situation during the actual data transmission already in advance and to use this information during the link adaptation stage. Hence, the selection of appropriate transmission parameters, such as the modulation scheme or code rate to be used, can be significantly improved, thus eventually leading to a better system performance in terms of a generally higher user and sector throughput. Furthermore, since an inaccurate estimation of the interference level often affects users located near the sector-edge more than users located in the center of a sector, because for sector-edge users the interference level is usually comparable to the useful signal power level, also the system fairness might be improved this way. These potential gains can be obtained by means of a novel inter-site cooperation scheme requiring only a minimal to moderate backhaul load and only a small additional delay.

## Claims

1. A method for communication in a cellular wireless communication network (10) with the following steps:
- allocating a pre-determined wireless resource to be used for a first data transmission from a first transmitting device (410; 120) to a first receiving device (120; 410) during a pre-determined time interval,
- determining at least one second transmitting device (420, 430, 440, 450; 110, 130) scheduled for a second data transmission via said pre-determined wireless resource during said pre-determined time interval,
- providing channel state information of at least one of the communication channels between respective ones of said second transmitting devices (420, 430, 440, 450; 110, 130) and said first receiving device (120; 410),
- predicting an interference state for said first data transmission caused by said second data transmissions based on said channel state information,
- defining at least one transmission parameter for said first data transmission based on said predicted interference state, and
- performing said first data transmission during said pre-determined time interval using the defined transmission parameters.

2. The method of claim 1, wherein a first base station (120) takes part in said first data transmission and wherein the step of determining at least one second transmitting device (420, 430, 440, 450; 110, 130) comprises transmitting resource allocation information between said first base station (120) and at least one cooperating base station (110, 130).

3. The method of claim 2, wherein the resource allocation information is transmitted via a backbone network (300) connecting the base stations of the cellular wireless communication network (10).

4. The method of any one of claims 1 to 3, wherein the first data transmission is an uplink communication with the first receiving device being a first base station (120) and the first transmitting device being a first mobile communication device (410) associated with said first base station.

5. The method of claim 4, wherein the second transmitting devices comprise at least one second mobile communication device (430, 440, 450) which is associated with a cooperating base station (130) of said first base station (120), and wherein providing channel state information of a communication channel comprises the first base station (120) evaluating at least one signal transmitted by one of said second transmitting devices (430, 440, 450).

6. The method of claim 4 or 5, wherein the first transmitting device (410) is located in a different sector than the second transmitting devices (420, 430, 440, 450).

7. The method of any one of claims 1 to 3, wherein the first data transmission is a downlink communication with the first transmitting device being a first base station (120) and the first receiving device being a first mobile communication device (410) associated with said first base station (120), and wherein each of the second transmitting devices (110, 130) is a cooperating base station of said first base station (120).

8. The method of claim 7, wherein the channel state information of a communication channel is provided to the first base station (120) from the respective cooperating base station (110, 130).

9. The method of claim 7, wherein providing channel state information of a communication channel comprises the first mobile communication device (410) performing a multi-cell channel estimation.

10. The method of any one of the preceding claims, wherein the steps of predicting an interference state and of defining said at least one transmission parameter are performed by the first transmitting device (410; 120) or by the first receiving device (120; 410).

11. The method of any one of the preceding claims, wherein said defined transmission parameter are used for selecting a modulation and/or coding scheme for the first data transmission.

12. A cellular wireless communication network (10), adapted for performing a method of any one of claims 1 to 11.

13. A base station (110, 120, 130) adapted for use in a cellular wireless communication network (10) of claim 12 for performing a method of any one of claims 1 to 11.

14. A mobile communication device (410) adapted for use in a cellular wireless communication network (10) of claim 12 for performing a method of any one of claims 1 to 11.
